# DEMANDE DE BREVET EUROPEEN

(11) **EP 3 384 969 A1**
(43) Date de publication de la demande: **10.10.2018**
(21) Numéro de dépôt: 18165944.2
(22) Date de dépôt: 05.04.2018
(51) Int. Cl.: A63F 13/24, A63F 13/98

(54) **DISPOSITIF D'ENTREE DE COMMANDE POUR MANETTE DE JEU, A ACTIONNEUR AMOVIBLE OU DEMONTABLE**

(30) Priorité: 06.04.2017 FR 1753011
(71) Demandeur: Playrapid, 13210 Saint-Remy-de-Provence (FR)
(72) Inventeur: RUBIO, Damien, 13210 SAINT-REMY-DE-PROVENCE (FR)
(74) Mandataire: IPAZ

(57) **Abrégé**

L'invention concerne un dispositif (202) d'entrée de commande pour manette de jeu (200), prévu pour être disposé sur une face arrière (102) de ladite manette de jeu (200), ledit dispositif (202) comprenant un actionneur (204) monobloc, dit palette, qui, en utilisation, est prévu pour se prolonger dans le sens de la largeur de ladite manette (200), caractérisé en ce qu'il comprend en outre un support de fixation (206), prévu pour être fixé sur ladite face arrière (102) au niveau d'une zone centrale de ladite face arrière (102) dans le sens de la largeur de ladite manette (200), ledit actionneur (204) étant fixé audit support de fixation (206) de manière amovible ou démontable.

Elle concerne également une manette de jeu munie d'au moins un tel dispositif de commande.

## Description

La présente invention concerne un dispositif d'entrée de commande pour manette de jeu comprenant un actionneur amovible, ou démontable. Elle concerne également une manette de jeu munie d'un dispositif d'entrée de commande.

Le domaine de l'invention est le domaine des manettes pour console de jeu ou ordinateur, prévues pour être tenues entre les mains d'un utilisateur.

### Etat de la technique

La plupart des jeux électroniques/informatiques sont commandés par des manettes de jeu.

Les jeux électroniques étant de plus en plus sophistiqués et permettant d'entrer de plus en plus de commandes, les manettes de jeu comportent aussi de plus en plus de boutons et deviennent de plus en plus sophistiquées.

On connait par exemple, la manette de jeu décrite dans le document EP 3 053 635. La manette de jeu décrite dans ce document comprend une palette de commande venant se fixer sur la face arrière de la manette et prévue pour être manipulée par les doigts d'un utilisateur tenant la manette. Cette palette de commande est ergonomique et permet de faciliter l'entrée de commande, en particulier en diminuant l'effort nécessaire pour entrer une commande.

Cependant, cette palette vient se fixer sur la coque arrière de la manette par des vis de fixation. Ainsi, lorsqu'il est nécessaire de changer la palette, par exemple pour la remplacer lorsqu'elle est abîmée, il est obligatoire de manipuler ces vis, ce qui peut être chronophage et peut présenter des risques de dégradation de la manette.

Un but de la présente invention est de remédier aux inconvénients précités.

Un autre but de l'invention est de proposer un dispositif d'entrée de commande pour une manette de jeu d'installation et de maintenance plus simple et plus rapide.

Un autre but de l'invention est de proposer un dispositif d'entrée de commande pour une manette de jeu présentant moins de risques de dégradation de la manette lors de son changement.

### Exposé de l'invention

L'invention propose d'atteindre au moins l'un des buts précités par un dispositif d'entrée de commande pour manette de jeu, prévu pour être disposé sur une face arrière de ladite manette de jeu, ledit dispositif comprenant un actionneur monobloc, dit palette, qui, en utilisation :
- est prévu pour se prolonger dans le sens de la largeur de ladite manette, en particulier sur au moins la moitié de la largeur de ladite manette, et
- être manipulé par les doigts d'un utilisateur tenant ladite manette de chaque côté de ladite manette,
caractérisé en ce qu'il comprend en outre un support de fixation prévu pour être fixé sur ladite face arrière au niveau d'une zone centrale de ladite face arrière dans le sens de la largeur de ladite manette, ledit actionneur étant fixé audit support de manière amovible ou démontable.

Ainsi, dans le dispositif d'entrée de commande, la palette formant l'actionneur est assemblée de manière amovible, ou démontable, avec un support de fixation qui lui-même est fixé à la face arrière de la manette. Par conséquent, lors d'un changement de la palette, il n'est pas nécessaire de démonter le support de fixation, qui reste fixé à la coque arrière de la manette, ce qui permet un changement plus simple et plus rapide de l'actionneur. De plus, comme le support de fixation n'est pas manipulé, le risque de dégradation de la manette lors d'un changement de la palette est diminué, voire nul.

Dans la présente demande, on entend par :
- « face avant », la face de la manette dirigée vers l'utilisateur lors de l'utilisation de la manette,
- « face arrière », la face de la manette dirigée à l'opposé de l'utilisateur lors de l'utilisation de la manette,
- « face supérieure » ou « bord supérieur », la face ou le bord de la manette se trouvant entre la face avant et la face arrière, et dirigé(e) vers le haut lors de l'utilisation de la manette,
- « face inférieure » ou « bord inférieur », la face ou le bord de la manette se trouvant entre la face avant et la face arrière, et dirigé(e) vers le bas lors de l'utilisation de la manette,
- « face latérale » ou « bord latéral », la face ou le bord de la manette se trouvant entre la face avant et la face arrière, et se trouvant un côté de la manette lors de l'utilisation de la manette et servant à la tenue de la manette par serrage dans la paume d'une main d'un utilisateur.

Avantageusement, la palette peut être assemblée avec le support de fixation de manière manuelle, sans utilisation d'outil.

Avantageusement, l'un au moins de la palette et du support de fixation peut comprendre un moyen de blocage de la palette avec le support de fixation, en position assemblée.

Ainsi, lors de la manipulation de la palette, cette dernière ne risque pas de se désolidariser du support de fixation de manière intempestive.

Suivant un mode de réalisation, le moyen de blocage peut comprendre un élément de retenue, en particulier une languette de retenue, flexible (ou élastiquement déformable) prévu du côté du support de fixation, respectivement de la palette, coopérant avec une surface de butée prévue sur ladite palette, respectivement sur le support de fixation, et s'opposant au désassemblage de ladite palette et dudit support de fixation.

Un tel moyen de blocage est facile à réaliser et présente un coût de réalisation faible.

Le moyen de blocage peut avantageusement être mis en position de blocage automatiquement lors de l'assemblage de la palette avec le support de fixation.

Par exemple, lorsque le moyen de retenue est un élément de retenue flexible, il peut être positionné de sorte qu'il est déplacé dans un sens lors de l'assemblage de la palette avec le support de fixation, puis revient dans sa position initiale pour se mettre en regard de la surface de butée.

Ainsi, il n'est pas nécessaire de manipuler le moyen de blocage lors de l'assemblage de la palette avec le support de fixation.

Suivant un mode de réalisation, le moyen de blocage peut être débloqué manuellement.

Suivant un autre mode de réalisation, le moyen de blocage peut être débloqué à l'aide d'un outil venant manipuler ledit moyen de blocage.

Ainsi, tout déblocage intempestif de la palette, lors de la manipulation de la palette, et plus généralement de la manette, est évité.

Avantageusement, lorsque le moyen de blocage est prévu sur le support de fixation, la palette peut comporter une ouverture traversante pour manipuler ledit moyen de blocage à l'aide d'un outil, en particulier pour le débloquer.

Ainsi, le déblocage de la palette peut être réalisé de manière simple et directe pour l'utilisateur.

Suivant un mode de réalisation, la palette peut être assemblée avec le support de fixation par translation suivant une direction formant un angle de moins de 10° par rapport au plan formé par la face arrière de la manette.

Une telle direction d'assemblage permet d'assurer une fixation entre la manette et le support de fixation plus robuste, de sorte à éviter une désolidarisation de la manette et du support, lors de la manipulation de la manette par l'utilisateur lors de l'entrée de commandes.

Suivant un mode de réalisation, la palette peut être assemblée avec le support de fixation par translation suivant une direction rejoignant les bords latéraux, en particulier une direction perpendiculaire aux bords latéraux.

Préférentiellement, la palette peut être assemblée avec le support de fixation par translation suivant une direction rejoignant le bord supérieur et le bord inférieur de la manette, en particulier une direction perpendiculaire auxdits bords inférieur et supérieur.

Cette direction d'assemblage permet de rendre l'assemblage de la palette et du support de fixation encore plus robuste, compte tenu du fait que la manette est manipulée du côté des bords latéraux de la manette.

Suivant une caractéristique avantageuse, le support de fixation, respectivement la palette, peut comporter un rail de guidage coopérant, lors de l'assemblage de la palette avec le support de fixation, avec un élément de guidage de forme complémentaire solidaire de la palette, respectivement du support de fixation.

Ainsi, l'assemblage, respectivement le désassemblage, de la palette avec le support de fixation sont facilités, car l'utilisateur est guidé par le rail de guidage.

Le rail de guidage peut comporter des lèvres de retenue, disposées de chaque côté pour retenir l'élément de guidage dans une direction perpendiculaire à la face arrière de la manette et pour éviter le désassemblage de la palette dans cette direction.

Le support de fixation peut être fixé à la face arrière de la manette par une ou plusieurs vis de fixation, par collage, ou par tout autre moyen de fixation.

Suivant une version non limitative, la palette peut comprendre :
- une partie centrale, dite de fixation, prévue pour être fixée sur ledit support de fixation, et
- au niveau de chacune de ses extrémités se trouvant du côté d'un bord de la manette, une partie, dite de manipulation, présentant une surface d'appui prévue pour être manipulée par au moins un doigt d'un utilisateur autre que le pouce.

De plus, la palette peut être formée par deux moitiés, se trouvant chacune d'un côté et de l'autre de la partie de fixation, les deux moitiés étant énantiomorphes entre elles.

Chaque moitié peut se présenter sous la forme d'une aile de papillon.

Suivant un mode de réalisation particulièrement avantageux, au moins une, en particulier chaque, partie de manipulation peut être recourbée par rapport à la partie de fixation, de sorte que, en utilisation, ladite partie de manipulation s'éloigne de la face arrière de la manette suivant une direction perpendiculaire à ladite face arrière.

Ainsi, la partie de manipulation forme un angle non nul par rapport à la face arrière de la manette, et par rapport à la partie de fixation de la palette.

En outre, pour au moins une partie de manipulation, l'angle entre la partie de manipulation et la partie de fixation peut être variable le long d'une direction rejoignant une face supérieure et une face inférieure de la manette.

En particulier, cet angle peut croître dans la direction allant du bord supérieur (de la face supérieure) au bord inférieur (à la face inférieure).

Pour au moins une partie de manipulation, l'angle formé par la partie de manipulation et la partie de fixation peut être compris entre 100 et 180°, et préférentiellement entre.

Avantageusement, au moins une partie de manipulation peut présenter une largeur croissante le long d'une direction rejoignant une face supérieure et une face inférieure de la manette.

En particulier, la largeur peut croître dans la direction allant du bord supérieur (de la face supérieure) au bord inférieur (à la face inférieure).

Au moins une partie de manipulation peut avantageusement présenter une hauteur déterminée pour être supérieure ou égale à la moitié de la hauteur de la face arrière d'une manette sur laquelle ledit dispositif est prévu pour être fixé, la hauteur étant mesurée dans une direction rejoignant une face supérieure et une face inférieure de la manette, en particulier une direction perpendiculaire à ces faces.

En outre, la palette peut se présenter sous la forme d'une plaque, d'épaisseur négligeable, éventuellement recourbée/repliée au niveau de chacune de ses extrémités pour former les parties de manipulation.

Plus généralement, la palette peut être réalisée en une seule pièce.

Suivant un autre aspect de la même invention, il est proposé une manette pour un appareil électronique/informatique, en particulier un appareil exécutant un jeu vidéo, comprenant au moins un dispositif d'entrée de commande selon l'invention, disposé sur sa face arrière.

Le dispositif d'entrée de commande peut être fixé à mi-hauteur ou dans une moitié inférieure de la face arrière de ladite manette, entre la face supérieure et la face inférieure.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple d'une manette de jeu traditionnelle ;
- les FIGURES 2a à 2c sont des représentations schématiques d'un exemple de réalisation non limitatif d'une manette selon l'invention équipée d'un dispositif d'entrée de commande selon l'invention ;
- les FIGURES 3a à 3c sont des représentations schématiques d'un exemple de réalisation non limitatif d'un support de fixation d'un dispositif d'entrée de commande selon l'invention ;
- les FIGURES 4a et 4b sont des représentations schématiques d'un exemple de réalisation non limitatif d'une palette d'un dispositif d'entrée de commande selon l'invention ;
- les FIGURES 5a et 5b sont des représentations schématiques d'un exemple de réalisation non limitatif d'un dispositif d'entrée de commande selon l'invention ; et
- les FIGURES 6a-6c sont des représentations schématiques d'un autre exemple de réalisation non limitatif d'une palette d'un dispositif d'entrée de commande selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieur.

En particulier, toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

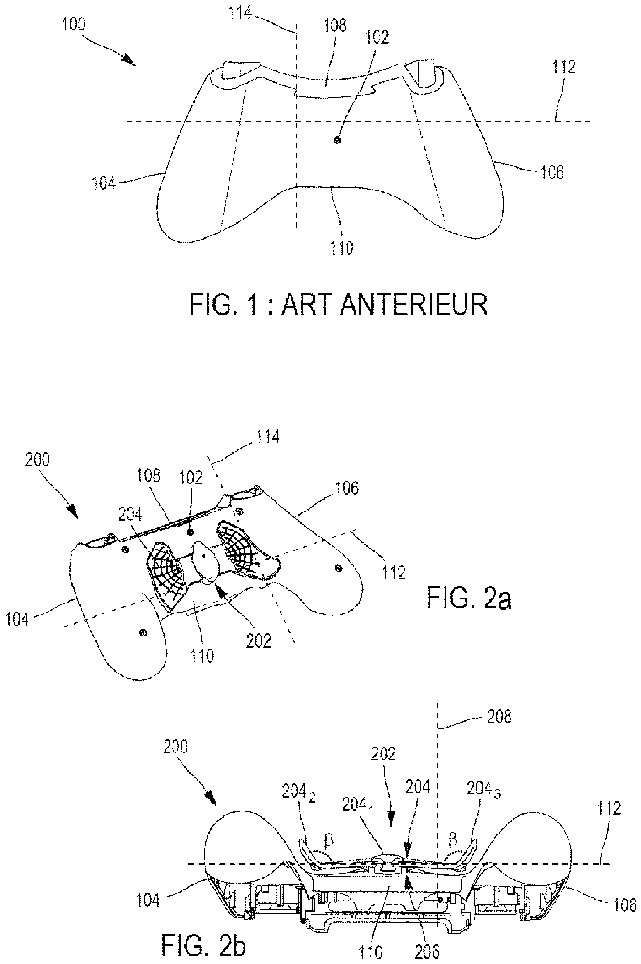

La FIGURE 1 est une représentation schématique d'un exemple d'une manette traditionnelle, selon une vue de derrière.

La manette 100, représentée sur la FIGURE 1, comprend une face arrière 102 séparant deux bords latéraux (ou deux faces latérales) 104 et 106. La face arrière 102 sépare aussi un bord supérieur (ou une face supérieure) 108 et un bord inférieur (ou une face inférieure) 110.

Lorsque l'utilisateur tient la manette 100 entre ses deux mains :
- chacun des bords latéraux 104 et 106 se trouve dans une main, et en particulier dans la paume d'une main de l'utilisateur ;
- le bord supérieur 108 se trouve dirigé vers le haut ou vers l'avant, et
- le bord inférieur 110 se trouve dirigé vers le bas ou vers l'utilisateur.

Pour la suite de la description on peut définir une direction 112 reliant les bords latéraux 104 et 106, et une direction 114 reliant les bords supérieur 108 et inférieur 110.

Les FIGURES 2a à 2c sont des représentations schématiques d'un exemple de réalisation non limitatif d'une manette selon l'invention.

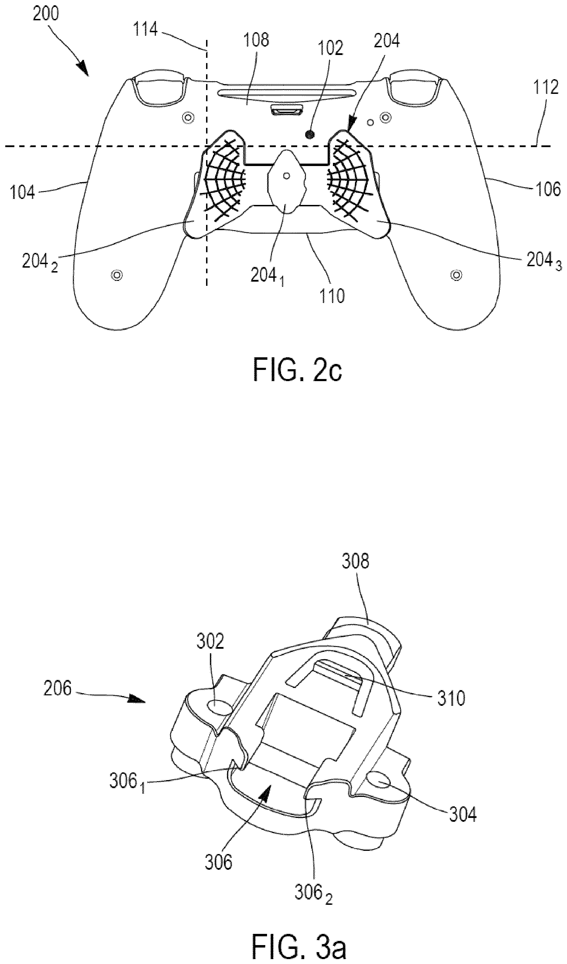

La manette 200 est représentée sur la FIGURE 2a selon une vue isométrique de derrière, sur la FIGURE 2b selon une vue de dessous et sur la FIGURE 2c selon une vue de derrière.

La manette 200 comprend un dispositif d'entrée de commande 202 fixée sur sa face arrière 102.

Le dispositif de commande 202 comprend un actionneur 204, également appelé palette dans la suite, et un support de fixation 206. Le support de fixation 206 est prévu pour être fixé sur la face arrière 102 de la manette 200, et la palette 204 est prévue pour venir s'assembler avec le support de fixation 206 de manière démontable, ou amovible.

Tel que montré sur les FIGURES 2b et 2c, la palette 204 est formée par une partie centrale 204₁, formant partie de fixation, et coopérant avec le support de fixation 206 pour maintenir la palette 204 solidaire avec le support de fixation 206.

La palette 204 comporte en outre au niveau de chacune de ses extrémités, se trouvant du côté d'un bord de la manette 200, une partie, dite de manipulation : respectivement une partie de manipulation 204₂ du côté du bord 104, et une partie de manipulation 204₃ du côté du bord 106.

Chaque partie de manipulation 204₂ et 204₃ forme une surface d'appui prévue pour être manipulée par au moins un doigt d'un utilisateur autre que le pouce, lorsque la manette 200 est tenue entre les mains de l'utilisateur.

Comme visible sur la FIGURE 2b, chaque partie de manipulation, respectivement 204₂ et 204₃, est recourbée ou repliée par rapport à la partie de fixation 204₁ et forme un angle β non nul par rapport à la partie de fixation 204₁, avec 125°≤β≤145°. Par conséquent, chaque partie de manipulation, respectivement 204₂ et 204₃, s'éloigne de la face arrière 102 de la manette 200 dans une direction 208 perpendiculaire à ladite face arrière 102, et le long de la direction 112 dans le sens allant de la partie de fixation 204₁ vers le bord latéral, respectivement 104 et 106.

Pour chaque partie de manipulation, respectivement 204₂ et 204₃, l'angle formé entre ladite partie de manipulation et la partie de fixation 204₁ est croissant le long de la direction 114 dans le sens allant du bord supérieur 108 vers le bord inférieur 110.

En outre, pour chaque partie de manipulation, respectivement 204₂ et 204₃, la largeur de la partie de manipulation est croissante le long de la direction 114 dans le sens allant du bord supérieur 108 vers le bord inférieur 110.

Les FIGURES 3a à 3c sont des représentations schématiques d'un exemple de réalisation non limitatif d'un support de fixation d'un dispositif d'entrée de commande selon l'invention.

Le support de fixation des FIGURES 3a-3c est le support de fixation 206 du dispositif d'entrée de commande 202 des FIGURES 2a-2c.

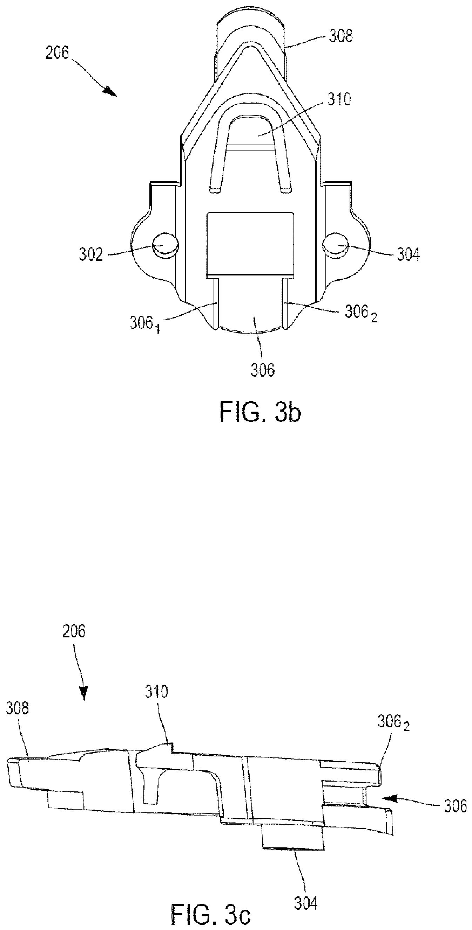

Le support de fixation 206 est représenté sur la FIGURE 3a selon une vue isométrique, sur la FIGURE 3b selon une vue de dessous, et sur la FIGURE 3c selon une vue en coupe.

Le support de fixation 206 comporte deux ouvertures de fixation 302 et 304 prévues pour accueillir deux vis de fixation (non représentées) permettant de fixer le support de fixation 206 sur une coque arrière de la manette formant la face arrière de la manette.

Le support de fixation 206 comprend un rail de guidage 306 femelle, prévu pour accueillir un élément de guidage mâle de la palette lors de l'assemblage de la palette avec le support de fixation 206, dans la direction 114 et dans le sens allant du bord supérieur 108 vers le bord inférieur 110. Le rail de guidage 306 comporte également des lèvres de retenue 306₁ et 306₂ permettant le maintien de la palette sur le support de fixation 206 dans la direction 208 perpendiculaire à la face arrière de la manette, une fois assemblés.

Le support de fixation 206 comprend un élément de guidage 308 mâle, prévu pour s'insérer et coulisser dans un rail de guidage femelle de la palette lors de l'assemblage de la palette avec le support de fixation, dans la direction 114 et dans le sens allant du bord supérieur 108 vers le bord inférieur 110 de la manette.

Le support de fixation 206 comprend en outre une languette de retenue flexible 310 coopérant avec une surface de butée prévue sur ladite palette et s'opposant au désassemblage de ladite palette et dudit support de fixation, dans la direction 114, dans le sens allant du bord inférieur 110 vers le bord supérieur 108.

La languette de retenue 310 comporte une extrémité biseautée de sorte qu'elle est mise en place automatiquement lors de l'assemblage de la palette sur le support de retenue 206, par translation dans la direction 114.

La languette de retenue 310 est flexible dans la direction 208 perpendiculaire à la face arrière de la manette.

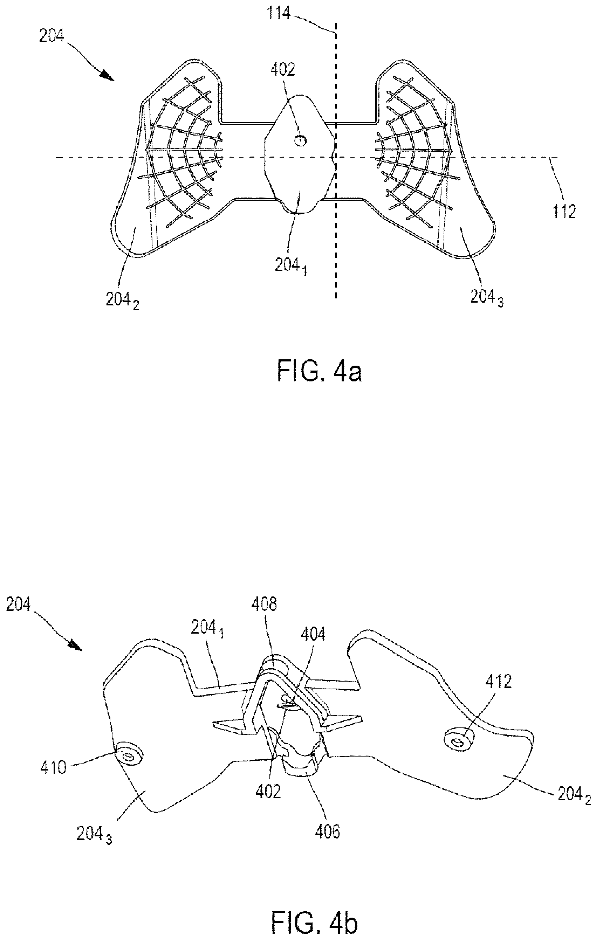

Les FIGURES 4a et 4b sont des représentations schématiques d'un exemple de réalisation non limitatif d'une palette d'un dispositif selon l'invention.

La palette des FIGURES 4a-4b correspond à la palette 204 du dispositif d'entrée de commande 202 des FIGURES 2a-2c.

La palette 204 est représentée sur la FIGURE 4a selon une vue de devant et sur la FIGURE 4b selon une vue isométrique de dessous.

La palette 204 comporte une ouverture 402, traversante, permettant le passage d'un outil pour venir débloquer la languette de retenue flexible 310 du support de fixation 206, par un appui suivant la direction 208.

La palette 204 comporte en outre une surface de butée 404 contre laquelle la languette de butée 310 vient se positionner pour empêcher la désolidarisation de la palette 204 et du support de fixation 206.

La palette 204 est pourvue d'une forme de guidage mâle 406, prévu pour s'insérer et coulisser dans le rail de guidage femelle 306 du support de fixation 206 lors de l'assemblage de la palette 204 avec le support de fixation 206, dans la direction 114 et dans le sens allant du bord supérieur 108 vers le bord inférieur 110.

La palette 204 comprend une ouverture 408 femelle, formant un logement d'accueil, dans laquelle l'élément de guidage mâle 308 du support de fixation 206 vient se loger lors de l'assemblage de la palette 204 avec le support de fixation 206, dans la direction 114 et dans le sens allant du bord supérieur 108 vers le bord inférieur 110.

Par ailleurs, du côté de sa surface se trouvant en regard de la manette, la palette 204 comporte deux picots 410 et 412, disposés chacun au niveau d'une partie de manipulation, respectivement 204₂ et 204₃, et prévus pour venir appuyer sur deux capteurs, lors de l'utilisation de la palette 204. En effet, lorsque l'utilisateur exerce une pression sur une partie de manipulation 204₂ et 204₃, la palette se déforme légèrement ce qui amène le picot en contact et en pression sur un capteur se trouvant en regard dudit picot.

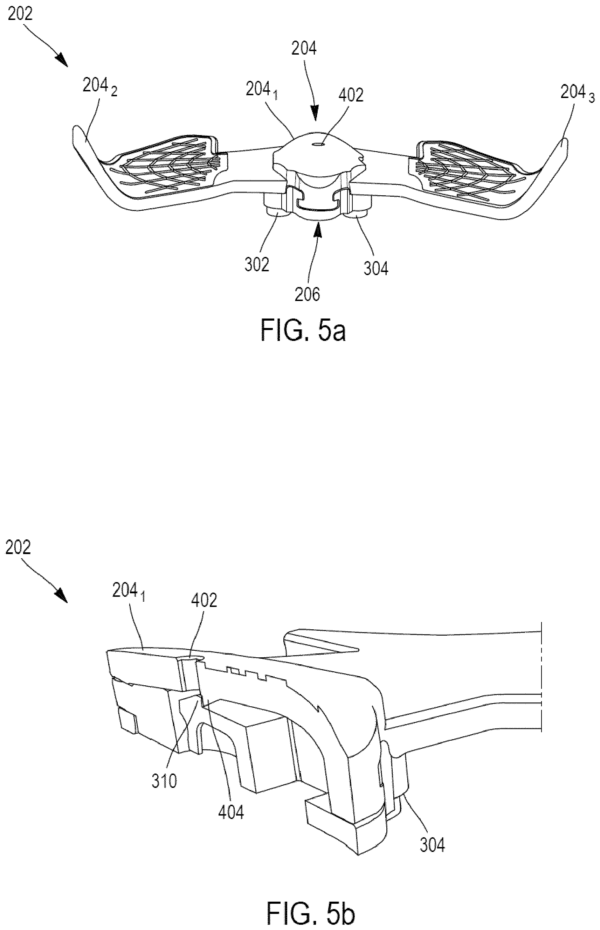

Les FIGURES 5a et 5b sont des représentations schématiques d'un exemple de réalisation non limitatif d'un dispositif d'entrée de commande selon l'invention, et en particulier du dispositif 202 équipant la palette 200.

Le dispositif d'entrée de commande 200 est représenté sur la FIGURE 5a selon une vue isométrique de devant et sur la FIGURE 5b selon une vue de coupe.

Sur les FIGURES 5a et 5b la palette 204 et le support de fixation 206 sont représentés assemblés.

Le support de fixation peut être obtenu par exemple par moulage. Il peut être réalisé en un matériau plastique rigide, tel que le PVC, ou en métal.

La palette peut être obtenue par exemple par moulage. Elle peut être réalisée en un matériau plastique rigide, tel que le PVC, ou en métal.

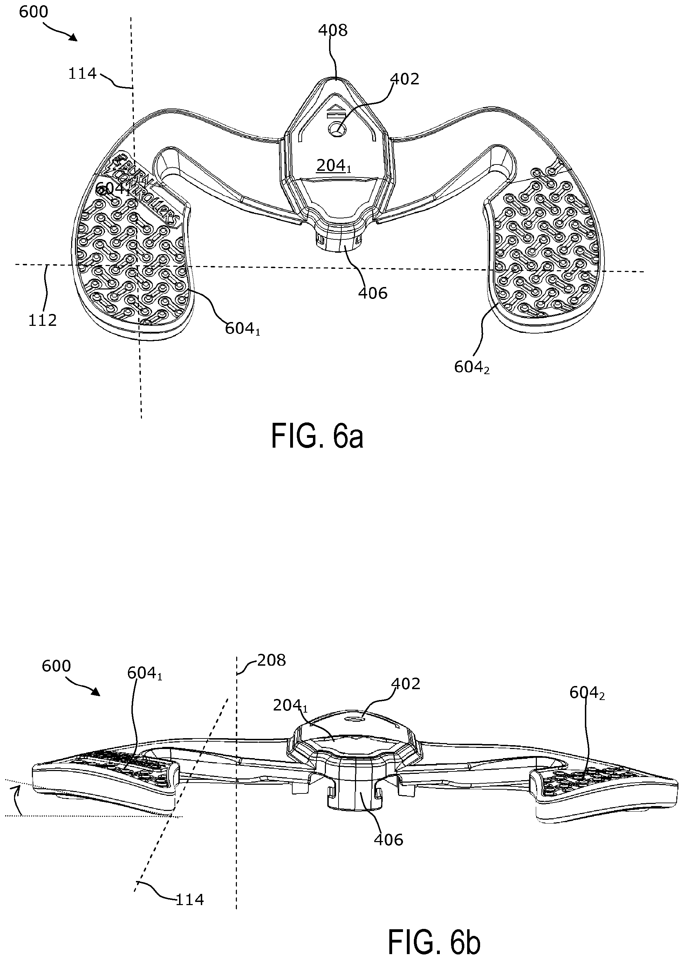

Les FIGURES 6a-6c sont des représentations schématiques d'un autre exemple de réalisation non limitatif d'une palette d'un dispositif selon l'invention.

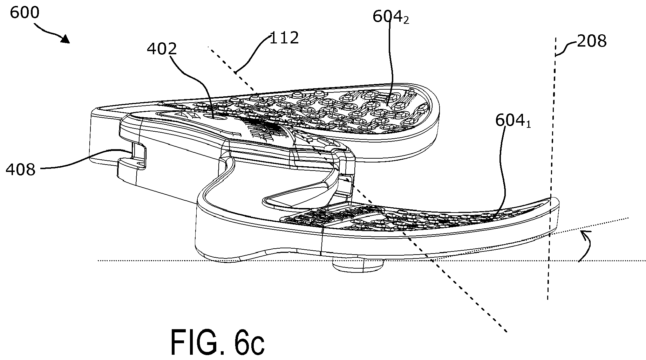

La palette 600 est représentée sur la FIGURE 6a selon une vue de face, sur la FIGURE 6b selon une vue de dessous et sur la FIGURE 6c selon une vue de côté.

La palette 600 comporte une partie de fixation 204₁ identique à celle de la palette 204.

La palette 600 se différencie de la palette 204 par ses parties de manipulation 604₁ et 604₂.

En particulier, chaque partie de manipulation 604₁ et 604₂ de la palette 600 est légèrement recourbée autour de la direction 114 de sorte à s'éloigner de la coque arrière dans la direction 208, tel que visible sur la FIGURE 6b. Chaque partie de manipulation 604₁ et 604₂ de la palette 600 est aussi légèrement recourbée autour de la direction 112 de sorte à s'éloigner de la coque arrière dans la direction 208, tel que visible sur la FIGURE 6c.

Ainsi, chaque partie de manipulation 604₁ et 604₂ permet de mieux retenir le doigt de l'utilisateur venant appuyer sur ladite partie de manipulation 604₁,604₂ pour entrer une commande.

Bien entendu l'invention n'est pas limitée aux exemples qui viennent d'être décrits.

Par exemple, la palette peut se présenter une forme différente de celle décrite. L'assemblage de la palette avec le support de fixation peut être réalisé différemment du moment qu'il permet un assemblage manuel ou déformable.

## Revendications

1. Dispositif (202) d'entrée de commande pour manette de jeu (200), prévu pour être disposé sur une face arrière (102) de ladite manette de jeu (200), ledit dispositif (202) comprenant un actionneur (204;600) monobloc, dit palette, qui, en utilisation, est prévu pour se prolonger dans le sens de la largeur de ladite manette (200), et être manipulé par les doigts d'un utilisateur tenant ladite manette (200) de chaque côté de ladite manette (200), **caractérisé en ce qu'**il comprend en outre un support de fixation (206), prévu pour être fixé sur ladite face arrière (102) au niveau d'une zone centrale de ladite face arrière (102) dans le sens de la largeur de ladite manette (200), ledit actionneur (204;600) étant fixé audit support de fixation (206) de manière amovible ou démontable.

2. Dispositif (202) selon la revendication précédente, caractérisé en ce l'un au moins de la palette (204;600) et du support de fixation (206) comprend un moyen de blocage (310,404) de la palette (204;600) avec le support de fixation (206), en position assemblée.

3. Dispositif (202) selon la revendication précédente, **caractérisé en ce que** le moyen de blocage comprend une languette de retenue (310) flexible prévue du côté du support de fixation (206), respectivement de la palette, coopérant avec une surface de butée (404) prévue sur ladite palette (204;600), respectivement sur le support de fixation, et s'opposant au désassemblage de ladite palette (204;600) et dudit support de fixation (206).

4. Dispositif (202) selon l'une quelconque des revendications 2 ou 3, **caractérisé en ce que** le moyen de blocage (310) est flexible de sorte qu'il est mis en position de blocage automatiquement lors de l'assemblage de la palette (204;600) avec le support de fixation (206).

5. Dispositif (202) selon l'une quelconque des revendications 2 à 4, **caractérisé en ce que** le moyen de blocage (310) est débloqué à l'aide d'un outil venant manipuler ledit moyen de blocage (310).

6. Dispositif (202) selon la revendication 5, **caractérisé en ce que**, lorsque le moyen de blocage (310) est prévu sur le support de fixation (206), la palette (204;600) comporte une ouverture (402) traversante pour manipuler ledit moyen de blocage (310) à l'aide d'un outil.

7. Dispositif (202) selon l'une quelconque des revendications précédentes, **caractérisé en ce que** la palette (204;600) est assemblée avec le support de fixation (206) par translation suivant une direction (114) formant un angle de moins de 10° par rapport au plan formé par la face arrière (102) de la manette (200).

8. Dispositif (202) selon l'une quelconque des revendications précédentes, **caractérisé en ce que** la palette (204;600) est assemblée avec le support de fixation (206) par translation suivant une direction (114) rejoignant le bord supérieur (110) et le bord inférieur (108) de la manette (200).

9. Dispositif (202) selon l'une quelconque des revendications précédentes, **caractérisé en ce que** le support de fixation, respectivement la palette (204;600), comporte un rail de guidage (310) coopérant, lors de l'assemblage de la palette (204;600) avec le support de fixation (206), avec un élément de guidage (406) de forme complémentaire solidaire de la palette (204), respectivement du support de fixation.

10. Dispositif (202) selon l'une quelconque des revendications précédentes, **caractérisé en ce que** le support de fixation (206) est fixé à la face arrière (102) de la manette (200) par une ou plusieurs vis de fixation.

11. Dispositif (202) selon l'une quelconque des revendications précédentes, **caractérisé en ce que** la palette (204;600) comprend :
- une partie centrale (204₁), dite de fixation, prévue pour être fixée sur ledit support de fixation (206), et
- au niveau de chacune de ses extrémités se trouvant du côté d'un bord (104,106) de la manette (200), une partie, dite de manipulation (204₂,204₃ ; 604₁,604₂), présentant une surface d'appui prévue pour être manipulée par au moins un doigt d'un utilisateur autre que le pouce.

12. Dispositif (202) selon la revendication précédente, **caractérisé en ce qu'**au moins une partie de manipulation (204₂,204₃ ; 604₁,604₂) est recourbée par rapport à la partie de fixation (204₁), de sorte que, en utilisation, ladite partie de manipulation (204₂,204₃ ; 604₁,604₂) s'éloigne de la face arrière (102) de la manette (200) suivant une direction perpendiculaire (208) à ladite face arrière (102).

13. Manette (200) d'entrée de commande pour un appareil électronique/informatique, comprenant au moins un dispositif (202) d'entrée de commande selon l'une quelconque des revendications précédentes disposée sur sa face arrière (102).
